# DEMANDE DE BREVET EUROPEEN

(11) **EP 1 443 256 A1**
(43) Date de publication de la demande: **04.08.2004**
(21) Numéro de dépôt: 04362002.0
(22) Date de dépôt: 28.01.2004
(51) Int. Cl.: F16L 37/252, F16L 27/08, F16L 21/00, F16L 21/03, E03B 7/07, G01F 15/18, F16K 43/00, F16K 31/08, F16K 15/18

(54) **Dispositif de raccoerdement par bague rotative pour poste de comptage d'eau**

(30) Priorité: 29.01.2003 FR 0300990; 29.01.2003 FR 0300991
(71) Demandeur: PERSOHN S.A., F-33430 Bazas (FR)
(72) Inventeur: Persohn, Philippe, 33430 Sauviac (FR); Persohn, Jean-Pierre, 33730 Pompejac (FR)
(74) Mandataire: Thébault, Jean-Louis

(57) **Abrégé**

Dispositif de raccordement applicable à un poste de comptage d'eau, constitué principalement d'un compteur muni de piquages (12) et d'un module de raccordement, le compteur et le module étant reliés par une tubulure d'entrée (6) et une tubulure de sortie, connectées chacune par des moyens de raccordement à un desdits piquages (12), au moins un des moyens de raccordement comporte une bague (10) pourvue d'une partie de réception d'un desdits piquages (12), la bague et la tubulure associée étant munies de moyens coopérants (13,14) de retenue en translation selon l'axe de révolution de la bague, ces moyens de retenue autorisant une rotation relative de la tubulure et de la bague selon au moins un secteur angulaire, au moins une butée d'arrêt entre la tubulure et la bague entraînant la bague en rotation au delà dudit secteur angulaire.

## Description

La présente invention concerne un perfectionnement aux dispositifs de raccordement notamment pour postes de comptage d'eau.

Le raccordement des compteurs d'eau nécessite des dispositifs de jonction avec éventuellement des moyens de coupure d'eau. Pour ce faire, il est connu d'interposer des modules de raccordement munis de clapets entre le compteur et les canalisations. Le document FR 2 800 401 A1 par exemple concerne un dispositif de raccordement à raccord amovible et clapet. Selon ce document, il est prévu de réaliser une liaison entre un compteur et un module de raccordement par un mamelon vissé sur un coude fixe, le mamelon et le coude enserrant un élément support. Ce dispositif est toutefois encombrant et nécessite de nombreuses pièces. Par ailleurs, la fixation de raccords sur le compteur est faite par vissage et le serrage du joint est tributaire de la position des raccords sur le compteur ce qui peut conduire à un écrasement trop important du joint pour réaligner les organes du poste de comptage d'eau.

Dans le but d'accroître la souplesse de réalisation des raccordements du poste de comptage d'eau et d'offrir un encombrement réduit, la demande de brevet FR01 07069 au nom de la demanderesse propose un dispositif de raccordement selon lequel des raccords tubulaires sont reçus dans un corps formant module d'arrivée-départ d'eau et sont pour ce faire munis d'embouts mâles avec joints toriques externes. Selon cette demande de brevet, le corps formant module d'arrivée-départ d 'eau comporte des moyens vanne clapet d'isolement. Selon ce dispositif les raccords tubulaires sont raccordés au compteur au travers d'éléments de raccordement intermédiaires vissés permettant une certaine adaptation des positions des pièces mais au détriment d'une mise en oeuvre nécessitant des réglages de position.

Le raccordement des tubulures au compteur est selon les systèmes de l'art antérieur une opération pouvant conduire à un écrasement de joints de type faciaux tels que joints plats ou joints toriques pris entre deux portées entre le compteur et les tubulures de raccordement. En effet, les tubulures sont vissées sur des prises de départ et d'arrivée d'eau sur le compteur et, selon les tolérances de fabrication des filetages, il se peut que le vissage complet ne coïncide pas avec une position angulaire correcte des tubulures, dans les cas les plus défavorables il est nécessaire de faire faire à la tubulure pratiquement un tour complet entre une position pour laquelle le joint est en contact avec sa portée et la position où la tubulure est dans son axe de montage, ce qui revient, au niveau du joint, à un écart allant jusqu'à pratiquement 1 mm d'écrasement, cet écrasement risquant de causer des fuites et une dégradation du joint dans le temps.

Il est souhaitable, pour garantir une longévité accrue des raccordements, d'améliorer l'étanchéité de la zone de raccordement en évitant notamment d'écraser les joints au niveau des sorties du compteur.

Pour cela l'invention propose principalement un dispositif de raccordement étanche, notamment applicable à un poste de comptage d'eau constitué principalement d'un compteur muni de piquages et d'un module de raccordement, le compteur et le module étant reliés par une tubulure d'entrée et une tubulure de sortie, connectées chacune par des moyens de raccordement à un desdits piquages caractérisé en ce qu'au moins un des moyens de raccordement comporte une bague, pourvue d'une partie de réception de l'un desdits piquages, vissée sur le piquage, et associée à l'une desdites tubulures, la bague et la tubulure associée étant munies de moyens coopérants de retenue en translation selon l'axe de révolution de la bague, ces moyens de retenue autorisant une rotation relative de la tubulure et de la bague selon au moins un secteur angulaire et en ce que la tubulure se monte sur la bague selon plusieurs positions angulaires distinctes, la tubulure étant apte à tourner sur la bague selon un secteur angulaire sans entraîner la bague en rotation, au moins une butée d'arrêt entre la tubulure et la bague entraînant la bague en rotation au delà dudit secteur angulaire.

Plus particulièrement les moyens coopérants de retenue en translation peuvent comporter des bossages sur une surface cylindrique externe de la bague et des segments de rainures internes dans la tubulure.

Notamment les segments de rainures internes sont séparés par des segments d'introduction des bossages. De plus au moins un des segments de rainures peut comporter une butée d'arrêt en rotation d'au moins un des bossages.

La bague et la tubulure associée peuvent comporter des moyens d'étanchéité complémentaires.

Avantageusement, les moyens d'étanchéité complémentaires peuvent comprendre au moins un joint, logé dans une gorge interne de la tubulure, venant en appui contre une surface externe de la bague, ces moyens permettant le maintien d'une étanchéité entre la bague et la tubulure.

Dans un mode de réalisation avantageux, la bague est vissée sur le piquage de raccordement associé, la bague et le piquage de raccordement pouvant comporter des moyens d'étanchéité frontaux.

Toujours selon l'invention, la tubulure peut être montée sur la bague selon plusieurs positions angulaires distinctes, la bague étant apte à tourner dans la tubulure selon un secteur angulaire.

Selon un mode de réalisation particulier et dans le but de simplifier encore le raccordement entre un poste de comptage d'eau et un module porteur, d'améliorer l'étanchéité de la zone de raccordement, de garantir une longévité accrue des raccordements, ainsi que de simplifier encore le montage et le démontage du compteur et des tubulures sur le module et de diminuer les risques de fuites par corrosion à long terme des parties de raccordement, l'invention concerne en outre un dispositif de raccordement, notamment applicable à un poste de comptage d'eau constitué notamment d'un compteur et d'un module porteur d'un dispositif vanne-clapet d'isolement, le compteur et le module étant reliés par une tubulure d'entrée et une tubulure de sortie, ledit dispositif, interposé entre l'une et/ou l'autre desdites tubulures et le module, étant tel qu'il comporte un embout de raccordement disposé dans une chambre du module, la chambre étant pourvue d'une partie de réception d'une terminaison de raccordement de la tubulure associée.

L'invention concerne aussi un procédé de raccordement d'au moins une tubulure sur un compteur muni d'un dispositif selon l'une des revendications précédentes caractérisé par les étapes suivantes : vissage d'une bague sur un piquage du compteur jusqu'à une position d'appui étanche, insertion de la tubulure sur la bague selon une position angulaire déterminée d'engagement des moyens coopérants de retenue, rotation de la tubulure pour la placer dans une position angulaire d'engagement dans le module de raccordement.

D'autres caractéristiques et avantages de l'invention ressortiront de la description qui va suivre, donnée à titre d'exemple de réalisation non limitatif, en rapport avec les figures annexées qui représentent:
- figure 1, une vue générale d'un poste de comptage d'eau selon l'invention,
- figure 2a, une vue en perspective d'un compteur d'eau et d'une bague au cours d'une étape de montage selon l'invention,
- figure 2b, une vue du dispositif selon la figure 2a au cours d'une étape complémentaire de montage de tubulures,
- figure 3 un détail en coupe d'une tubulure et d'une bague et une vue de côté d'un piquage,
- figure 4 une vue en perspective d'une bague et d'une tubulure selon l'invention,
- figure 5 un détail de moyens d'engagement entre la bague et la tubulure selon l'invention.
- figure 6, une vue d'une tubulure et d'un module équipé d'un embout selon un mode de réalisation particulier de l'invention en cours de montage,
- figure 7, une vue éclatée d'une terminaison de raccordement en regard d'un embout et d'un dispositif vanne-clapet,
- figure 8, une vue en coupe d'un module muni d'un dispositif de raccordement selon le mode de réalisation particulier de la figure 6.

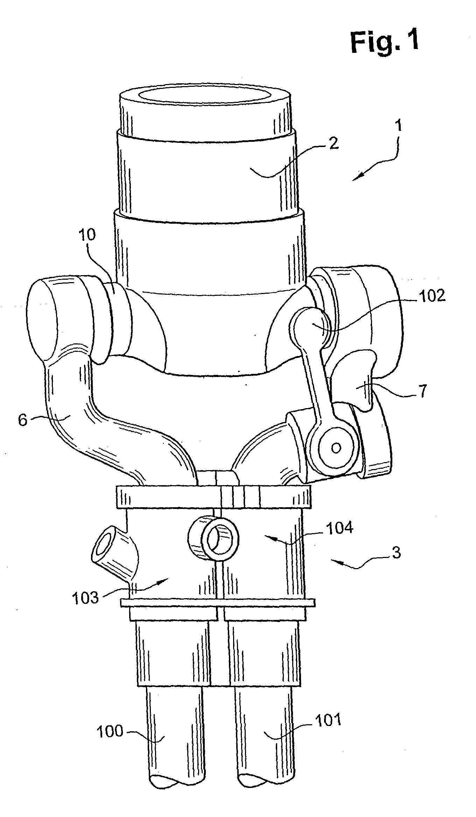

En figure 1 est décrit un poste 1 de comptage d'eau comportant un compteur 2, un module 3 de raccordement et des tubulures de liaison entre le compteur 2 et le module 3. Selon ce système, les conduites d'arrivée 100 et de départ 101 d'eau sont peu écartées et reçues sur une face inférieure du module. Le module comporte une première chambre 103 reliée vers le bas à la canalisation d'arrivée d'eau et vers le haut à une première tubulure 6 amenant l'eau au compteur 2. En sortie du compteur, l'eau passe dans une seconde tubulure 7, éventuellement munie d'un robinet d'arrêt 102, puis passe dans une seconde chambre 104 du module et ressort du poste par la canalisation 101 pour être distribuée vers l'abonné.

Pour raccorder le poste de comptage, il convient tout d'abord de raccorder les canalisations 100, 101 au module de manière traditionnelle. Ensuite il faut relier les tubulures 6 et 7 au compteur et enfin les insérer et les verrouiller dans le module pour terminer le raccordement.

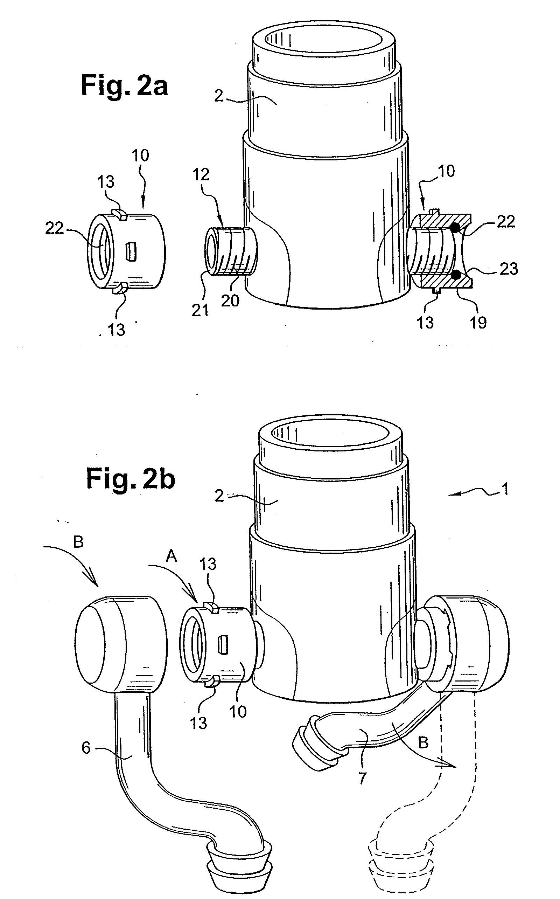

Les figures 2a et 2b représentent les étapes de montage des tubulures 6, 7 sur le compteur 2, avant montage des tubulures sur le module 3.

Sur la figure 2a en partie gauche une bague 10 est représentée en face d'un piquage 12 devant la recevoir. Sur la figure 2a en partie droite a été représenté une bague 10 en coupe montée sur le compteur 2.

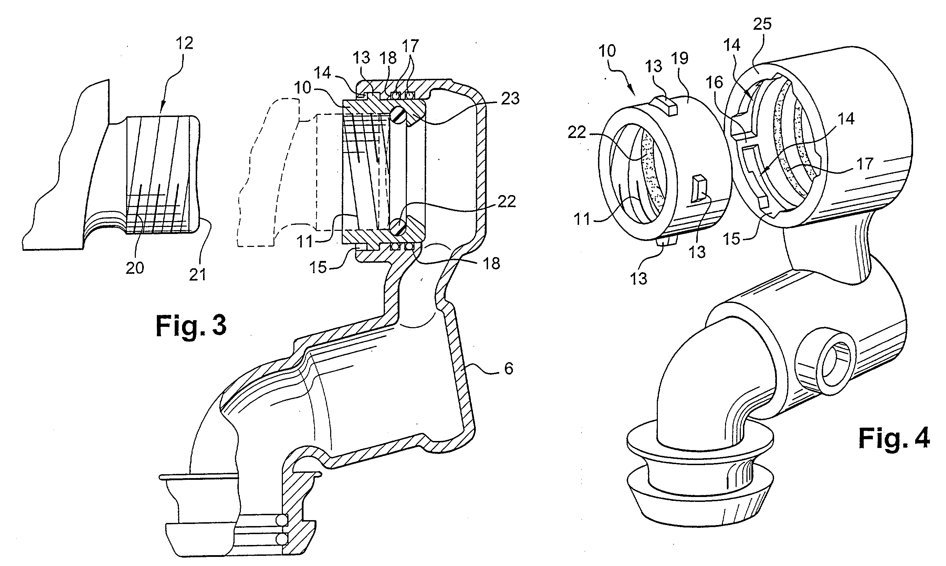

Le compteur comporte du côté arrivée d'eau et du côté départ d'eau des prises ou piquages 12 de raccordement . Selon l'exemple chaque piquage est associé à une bague 10. La bague 10 et son piquage 12 associé comportent des filetages 11, 20 complémentaires permettant de visser la bague sur le piquage. Les piquages sont pourvus d'un filetage externe 20 destiné à recevoir un filetage interne 11 (visible en figure 3) de la bague 10.

Pour assurer une étanchéité en sortie du compteur, la bague 10 et le piquage 12 comportent des moyens d'étanchéité frontaux 21, 22 tels que l'extrémité du piquage constitue une surface 21 d'appui pour un joint 22 disposé dans la bague. Le joint, par exemple localisé dans une gorge de la bague, pouvant être un joint torique en matériau élastomère, permet de rendre étanche la liaison entre le piquage et la bague. Dans le cas d'un joint torique, l'étanchéité est obtenue en vissant la bague 10 sur le piquage 12 pour un couple de serrage réduit. Pour un raccord standard dont le filetage a un pas de environ 1,8 mm, ce couple de serrage correspond environ à un quart de tour de serrage à partir de la mise en contact du joint avec la surface 21.

Le vissage de la bague sur le piquage est représenté par la flèche repère A sur la figure 2b illustrant, sur le côté gauche de la figure, une bague en cours de vissage sur le compteur et, sur le côté droit de la figure, une bague vissée sur le compteur, la tubulure étant en cours de positionnement.

Pour monter la tubulure sur la bague, l'invention propose de pourvoir la tubulure et la bague de moyens 13, 14 coopérants de retenue en translation selon l'axe de révolution de la bague, ces moyens de retenue autorisant la rotation de la bague selon au moins un secteur angulaire. Un exemple de tels moyens sont décrits en référence à la figure 4. Selon l'invention la tubulure a un degré de liberté au moins partiel en rotation autour de la bague, ce, de façon à ne pas entraîner la bague en rotation au moins sur un secteur de rotation de la tubulure. Ceci permet de ne pas écraser le joint 22 par un vissage de la bague causé par un entraînement de la bague par la tubulure lors du positionnement correct de la tubulure. Pour ce faire et, selon l'exemple représenté en figure 4, les moyens de retenue comportent des bossages 13 réalisés sur une surface cylindrique externe de la bague. Ces bossages peuvent entrer dans des segments de rainures internes 14 dans la tubulure au travers de segments 15 d'introduction des bossages séparant les segments de rainures. Selon l'exemple représenté, quatre bossages sont disposés à la périphérie de la bague et quatre rainures, perpendiculaires à l'axe d'insertion de la bague dans la tubulure, sont réalisées dans la tubulure. Ainsi la tubulure peut tourner d'environ un quart de tour autour de la bague sans entraîner la bague en rotation. Il reste dans le cadre de l'invention possible de prévoir un nombre différent de bossages et de segments. Par exemple un dispositif comportant 8 bossages et 8 segments d'un huitième de tour ou bien trois bossages et trois ou six segments permet éventuellement d'adapter la course libre de la bague dans la tubulure en fonction du pas des filetages du piquage et la bague.

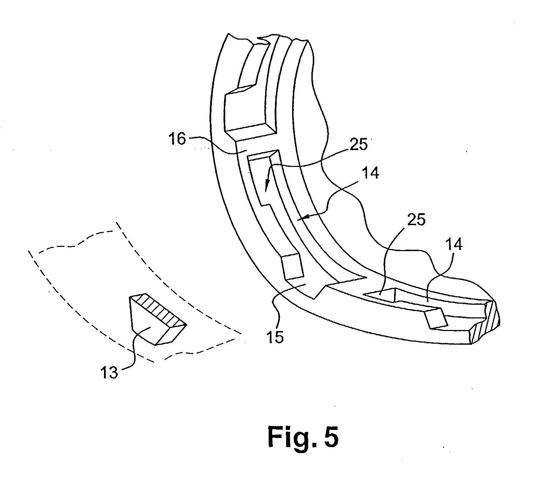

Toujours selon la figure 4 et selon le détail représenté en figure 5, les segments de rainures comportent des butées d'arrêt 16 en rotation des bossages 13. Au moins une butée d'arrêt est nécessaire. Cette ou ces butées d'arrêt permettent d'effectuer un serrage final de la bague sur le piquage. En outre et plus particulièrement visible en figure 5, des encoches 25 réalisées en fin de segment de rainure 14 par exemple par un simple fraisage ou par découpe permettent, par un léger recul de la bague lors de la mise en pression du système, un blocage des bossages 13 qui s'encliquettent dans les encoches, les encoches 25 permettant d'arrêter la bague en rotation et d'éviter tout mouvement intempestif de la bague ou désaccouplement accidentel.

Ainsi selon l'invention, pour raccorder les tubulures 6, 7 sur le compteur 2, l'opérateur, procédant au raccordement du compteur entre un abonné et le réseau, peut tout d'abord visser la bague 10 selon la flèche A sur le piquage 12 de raccordement du compteur jusqu'à une position d'appui étanche du joint 22 sur la surface 21 formant portée, le joint étant en appui entre cette portée 21 et un rebord 23 de la bague, puis insérer la tubulure sur la bague, ce selon une position d'engagement des moyens coopérants 13, 14 de retenue distante angulairement de au plus un quart de tour, pour un dispositif à quatre bossages et quatre rainures, par rapport à la position de montage final de la tubulure sur un module, puis enfin tourner la tubulure pour la positionner dans la position angulaire d'engagement dans le module 3. Selon ce principe il est possible de ne faire subir au joint qu'une compression supplémentaire minime et en tout cas inférieure à la compression causée par un quart de tour de rotation de la bague sur le piquage.

Toujours selon l'invention il est aussi possible pour l'opérateur de visser la bague jusqu'à simple contact du joint 22 avec la portée 21, puis d'insérer la tubulure sur la bague, ce, selon une position d'engagement des moyens coopérants 13, 14 de retenue distante angulairement de plus d'un quart de tour et moins d'un demi tour, toujours pour un dispositif à quatre bossages et quatre rainures, par rapport à la position de montage final de la tubulure sur un module, puis enfin, de tourner la tubulure jusqu'à la positionner dans la position angulaire d'engagement dans le module 3. Selon ce principe, l'opérateur effectue le serrage quart de tour du joint de la bague avec la tubulure pour parfaire l'étanchéité.

Afin de réaliser une étanchéité entre la bague 10 et la tubulure 6, 7, des moyens d'étanchéité complémentaires 17, 19 sont prévus entre la bague et la tubulure. Ces moyens, qui doivent permettre à la bague de tourner dans la tubulure sans perte d'étanchéité comprennent, selon l'exemple représenté notamment en figures 3 et 4 au moins un joint 17, logé dans une gorge 18 interne de la tubulure 6, 7, venant en appui contre une surface externe 19 de la bague. La surface externe est ici la périphérie de la bague située en arrière des bossages par rapport à la face avant de la bague considérée comme la face d'introduction de la bague sur le piquage 12 du compteur.

Ainsi l'invention propose de monter la tubulure 6, 7 sur la bague 10 selon plusieurs positions angulaires distinctes, la bague étant apte à tourner dans la tubulure selon un secteur angulaire puis éventuellement entraînée en rotation avec la tubulure par la ou les butées 16. L'invention permet ainsi un positionnement aisé des tubulures par rapport au compteur et au module auquel elles doivent être raccordées, ceci sans nécessiter d'outils spéciaux ni risquer un écrasement du ou des joints d'étanchéité au niveau de la sortie du compteur.

La bague peut notamment être réalisée en matériau plastique ou composite afin de limiter les risques de corrosion ou de grippage entre les tubulures et le compteur et permettre un démontage aisé.

Ainsi au niveau de l'interface compteur-tubulures, l'invention procure une liaison aisée à mettre en oeuvre, la bague permettant de conserver un degré de liberté en rotation des tubulures permettant une approche facile des tubulures pour leur raccordement avec le module 3. Le système de rainures et de bossage permet une plus grande souplesse de réglage et même si les frottements entre la bague et la tubulure, lors de la rotation de la tubulure, causent un couple de serrage sur le joint entre le piquage et la bague, ce couple de serrage reste suffisamment faible pour ne pas causer d'écrasement du joint.

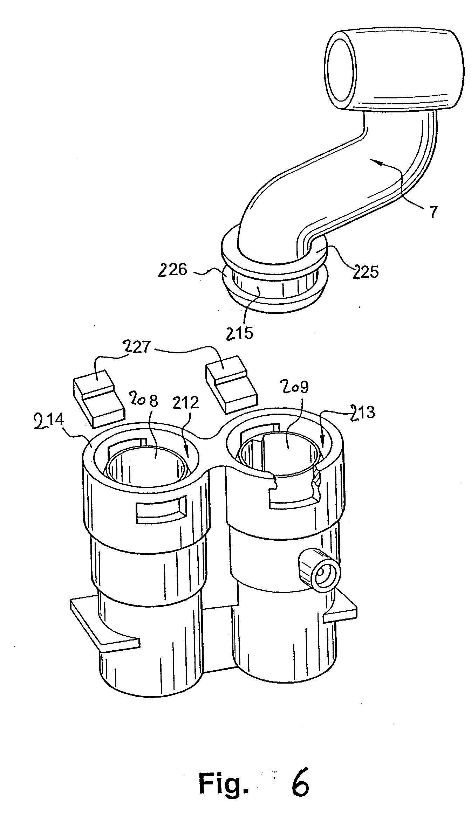

Pour effectuer le raccordement entre les tubulures et le module de raccordement comme décrit en figure 6, et selon un mode de réalisation avantageux de l'invention, au moins une liaison entre le module 3 et au moins une des tubulure 6, 7 comporte un embout 208, 209 de raccordement.

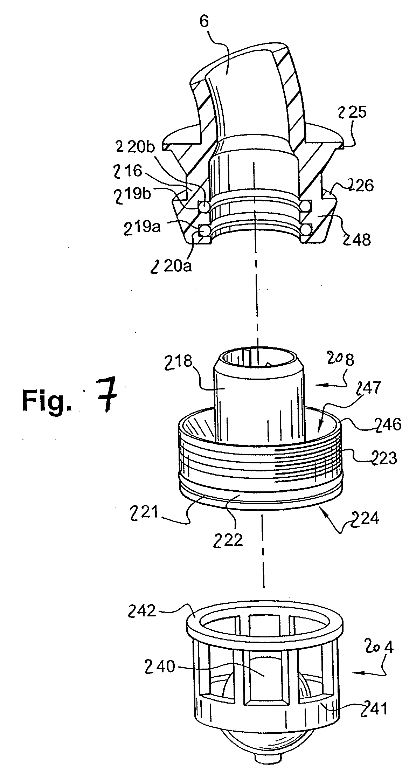

Selon l'exemple représenté, le module 3 est avantageusement muni de deux embouts 208, 209. Ces embouts de raccordement sont chacun disposés dans une chambre 210, 211 du module. Chaque chambre 210, 211 comporte une partie 212, 213 ouverte, débouchant sur une face externe 214 du module. Ces parties ouvertes sont destinées à recevoir les embouts 208, 209 et les terminaisons 215 et 216 des tubulures du compteur au module associées à ces embouts de raccordement. Du côté arrivée d'eau, la chambre 210 reçoit l'embout 208 notamment représenté en figure 7. Cet embout, de forme généralement cylindrique, comporte selon son axe de révolution une section de maintien 217 et une section de raccordement 218.

Dans sa partie basse, partie la plus enfoncée dans la chambre, l'embout 208 comporte une première surface externe d'étanchéité avec une surface interne de la chambre. Cette surface d'étanchéité est aussi la surface permettant de monter l'embout dans la chambre et fait partie de la section de maintien 217 de l'embout de raccordement dans la chambre. Cette section de maintien comporte des moyens 223 de rétention dans la chambre. Ces moyens sont constitués, dans l'exemple représenté, par un filetage complémentaire d'un taraudage de la chambre. L'étanchéité entre l'embout et la chambre est renforcée par un joint torique 222 reçu dans une gorge annulaire 221 disposée sous le filetage 223 de l'embout.

A l'opposé de la section de maintien, l'embout comporte une section 218 de raccordement avec la tubulure qui lui est associée. Le raccordement est réalisé en insérant la terminaison 216 de raccordement de la tubulure sur la section de raccordement 218 de l'embout.

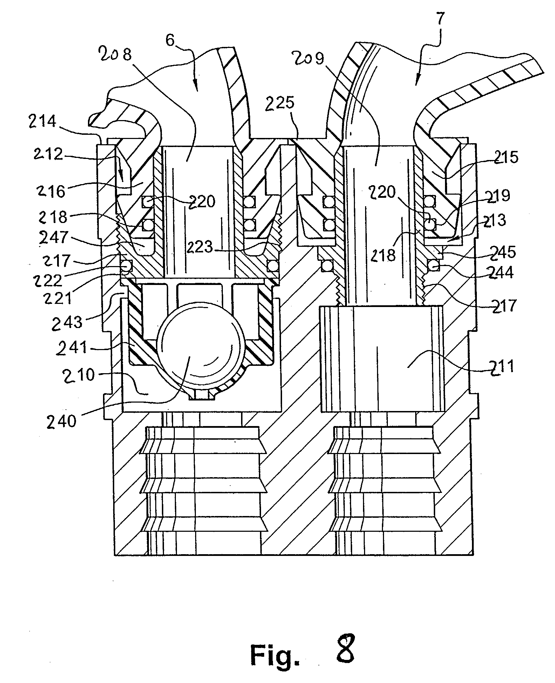

Selon la figure 8, les deux tubulures 6, 7 sont reçues sur des embouts de raccordement cylindriques. Les terminaisons 215 et 216 de raccordement des tubulures 6, 7 sont chacune pourvue d'une surface interne de réception d'un embout 208, 209 de raccordement. Les embouts comportent chacun une surface externe d'étanchéité avec une surface interne de la terminaison 215, 216 de raccordement. De façon avantageuse et pour permettre une rotation des tubulures si nécessaire, les surfaces internes des terminaisons de raccordement et les surfaces externes des sections de raccordement des embouts sont cylindriques, les terminaison de raccordement comportant au moins une, deux selon l'exemple représenté, gorge 219 de réception d'un joint torique 220 assurant l'étanchéité entre l'embout et la section de raccordement.

Comme décrit en figures 3 et 4, au niveau de l'arrivée d'eau, du côté opposé à la section de raccordement, l'embout 8 de raccordement comprend une face annulaire 224 de maintien d'un élément porteur 241 d'un dispositif vanne-clapet d'isolement disposé dans la chambre 210. L'élément porteur a une forme de panier ajouré pour laisser passer l'eau autour d'un organe clapet d'obturation 240 constitué par une sphère réalisée dans un matériau magnétique. L'organe d'obturation 240 est mobile dans le panier entre une position de libre passage de l'eau pour laquelle l'organe d'obturation repose dans le fond du panier et une position d'obturation, dans laquelle l'organe d'obturation est soulevé du panier jusqu'à buter contre la face annulaire formant siège de l'embout 208 et boucher le passage de l'eau. L'élément porteur 241 comporte une collerette 242 maintenue contre un rebord 243 de la chambre par la face annulaire 224 de l'embout 8. Pour permettre le retour de l'organe clapet dans sa position de libre passage de l'eau des moyens de fuite tels que connus du document EP 0 759 133 et non représentés ici peuvent être prévus.

Toujours selon la figure 8, une chambre sans dispositif d'arrêt est réalisée dans le module 3 du côté départ d'eau vers l'abonné. Cette chambre reçoit un embout 209 qui comporte comme l'embout 8 une section de maintien et une surface externe d'étanchéité ainsi qu'un joint torique 244. Selon l'exemple, le joint torique est disposé contre une collerette 245 de l'embout.

Du fait de la présence des embouts, la section du module remplie d'eau est réduite, ce qui limite les risques de corrosion. Par ailleurs, une très bonne étanchéité peut être réalisée au niveau de la zone de maintien des embouts dans la chambre, ce qui réduit les risques de fuite. De plus, en réalisant les embouts dans un matériau plastique il y a moins de risques de blocage ou de grippage de ces embouts qui restent démontables.

Le montage des embouts dans la chambre se fait par l'ouverture de la chambre, côté réception des tubulures de raccordement du compteur.

Une fois les embouts montés, le module est prêt à être installé.

Les tubulures préalablement montées sur les bagues au niveau du compteur d'eau sont ensuite positionnées pour être insérées sur les embouts dans le module.

Le montage des tubulures se fait en glissant les tubulures sur les embouts. Ici l'étanchéité se fait entre la surface externe de la section de raccordement des embouts et la surface interne des tubulures. Selon l'exemple, les tubulures comportent des rainures 219a, 219b de réception de joints toriques 220a, 220b. Une réalisation pour laquelle la surface externe de l'embout et non la surface interne de la tubulure serait porteuse de gorges recevant des joints, est toutefois envisageable.

Lors du montage des tubulures sur les embouts, l'extrémité 248 des tubulures est reçue dans une gouttière disposée entre le corps de l'embout et la section de maintien formant une couronne 246. Un espace 247 reste libre au fond de la gouttière, cet espace étant à même de recevoir, lors du démontage d'une tubulure par exemple, des débris éventuellement accumulés dans l'eau. Cet espace garantit que l'introduction de la tubulure ne sera pas rendue impossible par de tels débris.

Afin de rendre l'approche de la tubulure aisée, l'extrémité 248 de cette tubulure peut, comme représenté en figure 7, avoir une section terminale généralement conique. De plus, selon l'exemple représenté, la terminaison 215 de raccordement de la tubulure 7 est pourvue, sur une surface externe, d'une collerette 225 d'appui sur le rebord 214 de l'orifice d'entrée de la chambre 212 ou de la chambre 213. Le complet enfoncement de la tubulure est atteint lorsque la collerette 225 de la tubulure entre en contact avec le rebord 214 d'appui de la tubulure sur le module entourant la chambre. En plus de l'appui pour les tubulures, cette collerette referme la chambre, ce qui protège la zone de raccordement de l'entrée de terre ou d'insectes tels que fourmis. Le dispositif de montage des tubulures sur les bagues par les zones d'insertion notamment quart de tour facilite grandement le montage au niveau du montage des tubulures dans le module.

Pour retenir la tubulure, des moyens d'encliquetage peuvent être prévus. Selon le mode de réalisation représenté, la terminaison de raccordement de la tubulure est pourvue d'une zone 226 d'encliquetage avec des moyens de retenue complémentaires 227, par exemple un élément inséré dans une ouverture du module tel qu'un clip de verrouillage ou un taquet ressort. De tels moyens sont représentés schématiquement en figure 6. Des moyens de bridage tels que prévus dans la demande de brevet FR01 07069 peuvent être aussi utilisés pour sécuriser la liaison.
Ainsi, au niveau de l'interface tubulure-embout, l'invention procure une liaison aisée à mettre en oeuvre, l'embout permettant de centrer la tubulure tout en conservant un degré de liberté en rotation des tubulures permettant une approche facile. De plus, selon cette configuration, les surfaces d'étanchéité sont protégées, celle de la tubulure étant interne et celle de l'embout étant entourée par le corps du module. Selon ce dispositif, il y a un découplage de la fonction d'étanchéité, à l'intérieur de la tubulure, et de la fonction de retenue des tubulures qui est réalisé par des collerettes externes des tubulures. Par ailleurs, dans le cas d'embouts en matériaux plastiques ou composites, il n'y a pas de risques de collage des tubulures par corrosion et le dispositif reste aisément démontable.

## Revendications

1. Dispositif de raccordement étanche, notamment applicable à un poste (1) de comptage d'eau constitué principalement d'un compteur (2) muni de piquages (12) et d'un module (3) de raccordement, le compteur (2) et le module (3) étant reliés par une tubulure d'entrée (6) et une tubulure de sortie (7), connectées chacune par des moyens de raccordement à un desdits piquages (12) **caractérisé en ce qu'**au moins un des moyens de raccordement comporte une bague (10), pourvue d'une partie de réception de l'un desdits piquages (12), vissée sur le piquage (12), et associée à l'une desdites tubulures, la bague et la tubulure associée étant munies de moyens coopérants (13, 14) de retenue en translation selon l'axe de révolution de la bague, ces moyens de retenue autorisant une rotation relative de la tubulure et de la bague selon au moins un secteur angulaire et **en ce que** la tubulure (6, 7) se monte sur la bague (10) selon plusieurs positions angulaires distinctes, la tubulure étant apte à tourner sur la bague selon un secteur angulaire sans entraîner la bague en rotation, au moins une butée d'arrêt entre la tubulure et la bague entraînant la bague en rotation au delà dudit secteur angulaire.

2. Dispositif selon la revendication 1 **caractérisé en ce que** les moyens coopérants de retenue en translation comportent des bossages (13) sur une surface cylindrique externe de la bague et des segments de rainures internes (14) dans la tubulure.

3. Dispositif selon la revendication 2 **caractérisé en ce que** les segments de rainures internes (14) sont séparés par des segments (15) d'introduction des bossages, au moins un des segments de rainures comportant ladite butée (16) d'arrêt en rotation d'au moins un des bossages (13).

4. Dispositif selon l'une des revendications précédentes **caractérisé en ce que** la bague (10) et la tubulure (6, 7) associée comportent des moyens d'étanchéité complémentaires (17, 19).

5. Dispositif selon la revendication 4 **caractérisé en ce que** les moyens d'étanchéité complémentaires comprennent au moins un joint (17), logé dans une gorge (18) interne de la tubulure (6, 7), venant en appui contre une surface externe (19) de la bague, ces moyens permettant le maintien d'une étanchéité entre la bague et la tubulure.

6. Dispositif selon l'une des revendications précédentes **caractérisé en ce que** la bague (10) et le piquage (12) associé comportent des moyens d'étanchéité frontaux (21, 22).

7. Dispositif de raccordement selon l'une quelconque des revendications précédentes, notamment applicable à un poste (1) de comptage d'eau comprenant un compteur (2) et d'un module (3) porteur d'un dispositif vanne-clapet d'isolement (4), le compteur (2) et le module (3) étant reliés par une tubulure d'entrée (6) et une tubulure de sortie (7), ledit dispositif étant interposé entre l'une et/ou l'autre desdites tubulures (6, 7) et ledit module (3) et **caractérisé en ce qu'**il comporte un embout (208, 209) de raccordement disposé dans une chambre (210, 211) du module, la chambre (210, 211) étant pourvue d'une partie (212, 213) de réception d'une terminaison (215, 216) de raccordement de la tubulure associée.

8. Dispositif selon la revendication 7 **caractérisé en ce que** la terminaison (215, 216) de raccordement de ladite tubulure (6, 7) associée est pourvue d'une surface interne de réception de l'embout (208, 209) de raccordement, lequel comporte une section (217) de maintien dans la chambre (210, 211) et une section (218) de raccordement s'insérant dans la terminaison (215, 216) de raccordement de la tubulure.

9. Dispositif selon l'une des revendications 7 ou 8 **caractérisé en ce que** l'embout (8, 9) comporte une première surface externe d'étanchéité avec une surface interne de la chambre et une deuxième surface externe d'étanchéité avec une surface interne de la terminaison (215, 216) de raccordement de la tubulure.

10. Dispositif selon l'une des revendications 8 ou 9 **caractérisé en ce que** la surface interne de la terminaison (215, 216) de raccordement de la tubulure est cylindrique et comporte au moins une gorge (219) de réception d'un premier joint (220), la section (218) de raccordement de l'embout (208, 209) de raccordement étant elle même cylindrique, la section de maintien (217) de l'embout (208, 209) comportant une gorge (221) annulaire de réception d'un deuxième joint (222) et des moyens (223) de rétention dans la chambre.

11. Dispositif selon la revendication 10 **caractérisé en ce que** les moyens de rétention (223) sont constitués d'un filetage coopérant avec un taraudage de la chambre.

12. Dispositif selon l'une quelconque des revendications 7 à 11, **caractérisé en ce que** l'embout (208) de raccordement comprend une face annulaire (224) de maintien du dispositif vanne-clapet d'isolement (204) disposé dans la chambre (210).

13. Dispositif selon l'une quelconque des revendications 7 à 12 **caractérisé en ce que** la terminaison (215, 216) de raccordement de la tubulure (6, 7) est pourvue d'une collerette externe (225) d'appui sur le rebord de l'orifice d'entrée de la chambre (212).

14. Dispositif selon l'une quelconque des revendications 7 à 13 **caractérisé en ce que** la terminaison (215, 216) de raccordement de la tubulure (6, 7) est pourvue d'une zone (226) d'encliquetage avec des moyens de retenue complémentaires (227).

15. Dispositif selon l'une quelconque des revendications 7 à 14 **caractérisé en ce qu'**au moins un embout (8) comporte une couronne (246) formant section (217) de maintien, la couronne étant reliée au corps de l'embout par une gouttière annulaire, un espace (247) restant libre au fond de la gouttière.

16. Procédé de raccordement d'au moins une tubulure (6, 7) sur un compteur (2) muni d'un dispositif selon l'une des revendications précédentes **caractérisé par** les étapes suivantes : vissage (A) d'une bague (10) sur un piquage (12) du compteur jusqu'à une position d'appui étanche, insertion de la tubulure (6, 7) sur la bague (10) selon une position angulaire déterminée d'engagement des moyens coopérants (13, 14) de retenue, rotation (B) de la tubulure pour la placer dans une position angulaire d'engagement dans le module (3) de raccordement.
